Europäisches Patentamt

**European Patent Office**

Office européen des brevets

(11) Veröffentlichungsnummer: **0 029 216**
**B1**

(12) **EUROPÄISCHE PATENTSCHRIFT**

(45) Veröffentlichungstag der Patentschrift:
**31.07.85**

(21) Anmeldenummer: **80106989.9**

(22) Anmeldetag: **12.11.80**

(51) Int. Cl.⁴: **G 11 B 5/09, H 03 M 13/00**

(54) Datenübertragungseinrichtung mit Pufferspeicher und Einrichtungen zur Sicherung der Daten.

(30) Priorität: **15.11.79 DE 2946163**

(43) Veröffentlichungstag der Anmeldung:
**27.05.81 Patentblatt 81/21**

(45) Bekanntmachung des Hinweises auf die Patenterteilung:
**31.07.85 Patentblatt 85/31**

(84) Benannte Vertragsstaaten:
**AT BE CH FR GB IT LI LU NL SE**

(73) Patentinhaber: **Siemens Aktiengesellschaft, Berlin und München Wittelsbacherplatz 2, D-8000 München 2 (DE)**

(72) Erfinder: **Hennenfeind, Karl, Ing. (grad.), Eichendorffplatz 10, D-8000 München 70 (DE)**
Erfinder: **Robert, Karl-Heinz, Ing. (grad.), Richard-Wagner-Strasse 41a, D-8023 Pullach (DE)**

(56) Entgegenhaltungen:
FR - A - 2 416 591
GB - A - 2 019 168

IBM Technical Disclosure Bulletin, Vol. 15, No. 9, Febr. 1973, P. 2772-2773
NEUES AUS DER TECHNIK, Nr. 3, 15. Juni 1978, Würzburg, DE, "Anpassungseinheit für einen seriellen Speicher", Seite 1
IBM TECHNICAL DISCLOSURE BULLETIN, Band 13, Nr. 1, Juni 1970, New York, US, P. HODGES et al.: "Virtual memory method for flagging recorded information", Seiten 207-208
GEC JOURNAL OF SCIENCE AND TECHNOLOGY, Band 40, Nr. 1, 1973, London, GB, R. SPEED et al.: "Mark II" stored-program control application to CCITT No. 6 field trials", Seiten 33-36

(56) Entgegenhaltungen: (Fortsetzung)
1964 IEEE INTERNATIONAL CONVENTION RECORD, Teil 5, 23-26 März 1964, New York, US, W. GLUCHOSKI: "Error control in a data switching system", Seiten 231 bis 238

**Beschreibung**

Die Erfindung betrifft eine Datenübertragungseinrichtung mit einem Pufferspeicher entsprechend dem Oberbegriff des Patentanspruches 1. Derartige Datenübertragungseinrichtungen sind allgemein bekannt, z. B. durch IBM Technical Disclosure Bulletin, Vol. 15, No. 9, Feb. 1973, Seiten 2772/2773.

Bei der Übertragung und Speicherung von Daten in Form von Signalen entstehen gelegentlich Verfälschungen oder Fehler. Es ist daher allgemein üblich, die Daten durch Hinzufügen von Sicherungsinformationen oder -zeichen zu sichern, die das Erkennen von aufgetretenen Fehlern und gegebenenfalls sogar eine Fehlerkorrektur ermöglichen. Die allgemein geläufigsten Verfahren zur Fehlererkennung sind die Paritätskontrolle und die zyklische Codesicherung (CRC). Weiterhin gibt es selbstkorrigierende Codes (ECC), die neben der Fehlererkennung eine Korrektur ermöglichen.

Beim Einspeichern oder Aussenden von Daten werden die Sicherungszeichen gebildet und den jeweils zugehörigen Daten hinzugefügt. Beim nachfolgenden Ausspeichern oder Empfangen der gesicherten Daten werden nach dem jeweils gleichen Verfahren die Sicherungszeichen erneut gebildet und mit den mit den Daten mitgelieferten Sicherungszeichen verglichen. Besteht dabei keine Übereinstimmung, so liegt ein Lesebzw. Übertragungsfehler vor. Der Lese- bzw. Übertragungsvorgang ist dann zu wiederholen, bzw. die Daten sind bei Verwendung selbstkorrigierender Codes zu korrigieren.

Bei einer Reihe von Anordnungen der eingangs genannten Art werden die Daten bisher auf zweierlei Art gesichert, nämlich bei der Speicherung im Pufferspeicher durch Paritätsbits und für die Übertragung über den angeschlossenen Datenweg, insbesondere wenn es sich um den Zugang zu einem Plattenspeicher handelt, durch selbstkorrigierende Codes. Letztere ermöglichen zwar einen hohen Grad an Sicherheit bei Bündelfehlern oder Einzelbitfehlern. Jedoch können außerhalb dieses Rahmens liegende Fehler zu Falschkorrekturen und damit zu Datenverfälschungen führen. Analoges gilt für Hardwarefehler der Sicherungseinrichtung selbst, wenn diese selbst nicht durch gesonderte Paritätskontrollen überwacht wird.

Vielfach werden derartige Datenübertragungseinrichtungen auch als Koppler zwischen zwei voneinander unabhängigen Einrichtungen verwendet, wie z. B. aus »Neues aus der Technik«, Nr. 3, 15. Juni 1978, Seite 460 bekannt ist, von denen die eine, z. B. in Form eines Plattenspeichers, seriell arbeitet.

Aufgabe der Erfindung ist es, ausgehend von Datenübertragungseinrichtungen der eingangs genannten Art, Aufbau und Arbeitsweise dieser Einrichtungen so zu gestalten, daß sie als Koppler zwischen zwei Einrichtungen, von denen wenigstens eine seriell arbeitet, verwendbar ist und die vorhandenen Sicherungseinrichtungen bei der Übertragung zwischen den beiden zu koppelnden Einrichtungen möglichst wirkungsvoll eingesetzt werden, so daß der Sicherungsgrad für die Datenübertragung insgesamt erhöht wird, ohne daß der Aufwand in gleichem Maße steigt.

Diese Aufgabe wird entsprechend den kennzeichnenden Merkmalen des Patentanspruches 1 gelöst.

Danach besteht die neue Lösung aus einer Reihe von Merkmalen, die kombinatorisch zusammenwirken. Dabei erfolgt in an sich bekannter Weise die Kopplung von zwei getrennten Einrichtungen, von denen wenigstens die eine seriell arbeitet, über den Pufferspeicher, in dem die Daten unabhängig von der Übertragungsrichtung jeweils zwischengespeichert werden.

Auch werden in an sich bekannter Weise zwei getrennte Sicherungseinrichtungen mit getrennten Sicherungsverfahren verwendet. Jedoch wird in der zweiten Sicherungseinrichtung nur eine Einrichtung zur Bildung der Sicherungszeichen für die Sicherung des Pufferspeichers vorgesehen, die wahlweise entsprechend der einen oder anderen Übertragungsvorrichtung an den Eingang oder Ausgang des Pufferspeichers anschaltbar ist, wobei jedoch die Arbeitsweise der Datenübertragungseinrichtung abhängig davon, ob es sich um eine Übertragung von der einen Einrichtung zur seriell arbeitenden Einrichtung oder in umgekehrter Richtung handelt, unterschiedlich ist. So wird die zweite Sicherungseinrichtung bei der Übertragung von der einen Einrichtung zur seriell arbeitenden Einrichtung sowohl bei der Eingabe der Daten in den Pufferspeicher zur Zwischenspeicherung als auch bei der nachfolgenden Weiterleitung zur seriell arbeitenden Einrichtung tätig, während bei umgekehrter Übertragungsrichtung nur die aus dem Zwischenspeicher weiterzuleitenden Daten von der zweiten Sicherungseinrichtung überprüft werden, nicht aber die zwischenzuspeichernden Daten. Dies ist dadurch möglich, daß auf dem Übertragungsweg zwischen dem Pufferspeicher und der seriell arbeitenden Einrichtung die Daten zusammen mit den zugehörigen Sicherungszeichen der zweiten Sicherungseinrichtung der Sicherung durch die erste Sicherungseinrichtung unterzogen werden.

Dies ermöglicht nicht nur die Sicherung der ersten Sicherungseinrichtung, sondern gleichzeitig auch die Sicherung des angeschlossenen seriellen Übertragungsweges und bei direkter Ansteuerung eines Speichers, z. B. eines Plattenspeichers, über diesen Übertragungsweg zugleich auch eine doppelte Sicherung des angeschlossenen Speichers. Zusätzlich wird durch die unmittelbare Abspeicherung der auf dem Übertragungsweg von der seriell arbeitenden Einrichtung mitgeführten Sicherungszeichen der zweiten Sicherungseinrichtung im Pufferspeicher beim Rückempfang und durch die erst nachfolgend bei der Weiterleitung zur anderen Einrichtung durchgeführten Prüfung der im Pufferspeicher zwischengespeicherten Daten anhand der abgespeicherten Sicherungszeichen auch der Pufferspeicher in einem Zuge erfaßt.

Gemäß der neuen Lösung wird also das zweite Sicherungsverfahren viel wirksamer angewandt und damit nicht nur die Hardwarekontrolle der ersten Sicherungseinrichtung, sondern auch die des Pufferspeichers für die eine Übertragungsrichtung umgangen. Auch ist eine Nichterkennung von Fehlern oder eine Falschkorrektur infolge der Überlagerung zweier verschiedener Sicherungsverfahren nahezu ausgeschlossen, wie auch die GB-A-2 019 168 zeigt. Als zusätzliches Sicherungsverfahren eignet sich vor allem ein zyklischer Code.

Gemäß einer Weiterbildung der Erfindung läßt sich der Pufferspeicher auch in beiden Übertragungsrichtungen durch das überlagerte Sicherungsverfahren absichern, wenn die von der zweiten Einrichtung angelieferten und nicht mit einem selbstkorrigierenden Code gesicherten Daten parallel zur Einspeicherung in den Pufferspeicher ebenfalls der zweiten Sicherungseinrichtung zugeführt werden und das dabei gebildete Sicherungszeichen ebenfalls im Pufferspeicher abgespeichert wird, während bei einer Ausgabe aus dem Pufferspeicher zur Übertragung zu der durch den selbstkorrigierenden Code gesicherten ersten Einrichtung das von der zweiten Sicherungseinrichtung jeweils neu ermittelte Sicherungszeichen mit dem jeweils abgespeicherten Sicherungszeichen verglichen wird.

Bei einer sehr häufigen Ausführungsform, bei der die Daten von der zweiten Einrichtung in Paralleldarstellung angeboten bzw. übernommen werden, die Zwischenspeicherung im Puffer ebenfalls in Paralleldarstellung erfolgt und ein Serien-Parallelumsetzer vorgesehen ist, erfolgt die Ansteuerung der zweiten Sicherungseinrichtung durch die Daten und die Übergabe der jeweils abzuspeichernden Sicherungszeichen der zweiten Sicherungseinrichtung an den Pufferspeicher jeweils über den Serienparallelumsetzer. Auf diese Weise wird eine gleichartige Ansteuerung der Sicherungseinrichtungen und des Pufferspeichers sowohl durch die Daten als auch durch die Sicherungszeichen sichergestellt. Auf eine empfangsseitige Sicherungsprüfung bei Entgegennahme von Daten in Paralleldarstellung und auf die Bereitstellung von Sicherungszeichen für den Übertragungsweg zur die Daten in Paralleldarstellung aufnehmenden Einrichtung kann dabei verzichtet werden, insbesondere, wenn diese Einrichtung ein Prozessor ist.

Ein weiterer Vorteil ergibt sich, wenn bei Unterteilung der Daten in Adreß- und Informationswörter beide Arten von Wörtern durch die zweite Sicherungseinrichtung getrennt gesichert werden, während die erste Sicherungseinrichtung lediglich die Informationswörter zusammen mit den zugehörigen Sicherungszeichen der zweiten Sicherungseinrichtung sichert.

Weitere Einzelheiten der Erfindung seien nachfolgend anhand eines in der Zeichnung dargestellten Ausführungsbeispieles näher erläutert. Im einzelnen zeigt

Fig. 1 eine Datenübertragungseinrichtung gemäß der Erfindung zur Kopplung einer parallelarbeitenden Einrichtung mit einer seriellarbeitenden Einrichtung, und

Fig. 2 den Aufbau eines Datenblockes mit Sicherung gemäß der Erfindung.

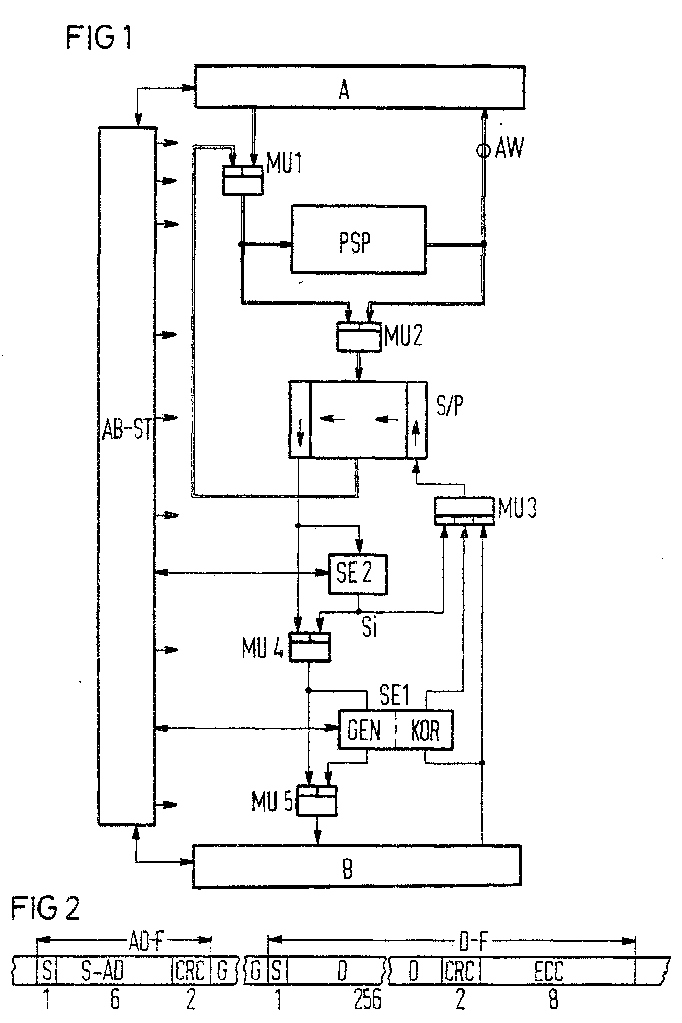

In Fig. 1 sind die durch die Datenübertragungseinrichtung miteinander zu koppelnden Einrichtungen mit A und B bezeichnet. wobei die Einrichtung A, z. B. ein Prozessor, die Daten parallel anliefert bzw. entgegennimmt, während die Einrichtung B, z. B. ein Plattenspeicher, die Daten seriell entgegennimmt bzw. anliefert. Die Datenübertragungseinrichtung besteht im wesentlichen aus einem Pufferspeicher PSP, einem Parallel/Serienumsetzer S/P, den beiden Sicherungseinrichtungen SE1 und SE2, einer Reihe von Auswahlschaltern MU1 bis MU5 für die Durchschaltung der verschiedenen Datenwege, sowie einer Ablaufsteuerung AB-ST für die Bereitstellung der einzelnen Steuertakte für die gezeigten Teile der Datenübertragungseinrichtung.

Die Arbeitsweise dieser Anordnung ist folgende: Bei der Anlieferung der Daten in paralleler Darstellung durch die Einrichtung A werden diese ohne Änderung der Darstellungsform über den Auswahlschalter MU1 parallel in den Pufferspeicher PSP eingegeben. Gleichzeitig werden die Daten über den Auswahlschalter MU2 und den Parallel/Serienumsetzer S/P zu der zweiten Sicherungseinrichtung SE2 geleitet, die das jeweils zugehörige Sicherungszeichen Si ermittelt und dies über den Auswahlschalter MU3, den Parallel/Serienumsetzer S/P und den Auswahlschalter MU1 ebenfalls zur Ergänzung der bereits abgespeicherten Daten dem Pufferspeicher PSP zuleitet.

Bei einer nachfolgenden Weiterleitung der abgespeicherten Daten an die Einrichtung B werden diese Daten und die Sicherungszeichen über den Auswahlschalter MU2 und den Parallel/Serienumsetzer S/P einerseits der zweiten Sicherungseinrichtung SE2 und andererseits über den Auswahlschalter MU4 der ersten Sicherungseinrichtung SE1, die mit einem fehlerkorrigierenden Code arbeitet, und des weiteren über den Auswahlschalter MU5 der Einrichtung B zugeleitet. Die zweite Sicherungseinrichtung SE2 ermittelt aus den zugeführten Daten erneut das Sicherungszeichen und vergleicht dies mit dem mitgeführten Sicherungszeichen. Stimmen dabei beide Zeichen nicht überein, so wird in an sich bekannter Weise ein Fehleralarm ausgelöst, der die Ablaufsteuerung AB-ST zu einer Wiederholungsanforderung veranlaßt.

Der gezeigte Auswahlschalter MU4 ist bei direkter Weiterleitung der im Pufferspeicher abgespeicherten Sicherungszeichen an sich nicht erforderlich, sondern nur, wenn lediglich die Daten aus dem Pufferspeicher PSP direkt weitergeleitet werden und das jeweils neu gebildete Sicherungszeichen Si als solches zugesetzt wird.

Der Generatorteil GEN der ersten Sicherungseinrichtung SE1 leitet aus der Gesamtheit der jeweils einen Sicherungsblock bildenden Daten und Sicherungszeichen ein weiteres Sicherungszeichen in Form eines Korrekturcodes ab, das jedem Datenblock durch zeitgerechte Umsteuerung des Auswahlschalters MU5 angehängt wird.

Die Daten gelangen somit auf zweifache Art gesichert zur Einrichtung B. Die bei umgekehrter Übertragungsrichtung in gleicher Weise gesichert von der Einrichtung B angelieferten Daten werden unmittelbar über den Auswahlschalter MU3, den Parallel/Serienumsetzer S/P und den Auswahlschalter MU1 an den Pufferspeicher PSP weitergeleitet und abgespeichert. Gleichzeitig werden die Daten samt Sicherungszeichen dem Korrekturteil KOR der ersten Sicherungseinrichtung SE1 zugeführt, die anhand des als Sicherungszeichen mitgeführten selbstkorrigierenden Codes die Daten samt der Sicherungszeichen für die zweite Sicherungseinrichtung SE2 überprüft. Ergibt sich dabei ein Fehler, so werden die überprüften Informationen korrigiert und auf demselben Wege wie die ursprünglichen Daten — Auswahlschalter MU3, Parallel/Serienumsetzer S/P und Auswahlschalter MU1 — an deren Stelle in den Pufferspeicher PSP eingeschrieben.

Bei der Weiterleitung dieser gespeicherten Daten an die Einrichtung A über den Schalter AW werden diese zusammen mit den zugehörigen Sicherungszeichen über den Auswahlschalter MU2 und den Parallel/Serienumsetzer S/P zur zweiten Sicherungseinrichtung SE2 geleitet und überprüft, wobei im Fehlerfall wiederum ein Fehleralarm zur Ablaufsteuerung AB-ST ausgelöst wird.

Neben der mit einem selbstkorrigierenden Code arbeitenden Sicherungseinrichtung SE1 für den zur Einrichtung B führenden seriellen Übertragungsweg wird also mit einer einzigen zusätzlichen zweiten Sicherungseinrichtung SE2, die nach einem anderen Sicherungsprinzip arbeitet, die durch die erste Sicherungseinrichtung SE1 durchgeführte Korrektur der Daten überwacht. Dadurch wird eine Datenverfälschung, die durch verfahrensbedingte Falschkorrektur beim Auftreten von außerhalb eines korrigierbaren Bündels liegenden Mehrbitsfehlern auftreten kann, verhindert. Gleichzeitig wird ohne zusätzlichen Hardwareaufwand die gesamte Datenübertragungseinrichtung mit ihren Hardwareteilen und zusätzlich der serielle Übertragungsweg zur Einrichtung B gesichert, wobei für den seriellen Übertragungsweg infolge der Doppelsicherung ein noch höherer Sicherungsgrad gegeben ist.

Eine Weiterleitung der im Pufferspeicher abgespeicherten bzw. der von der zweiten Sicherungseinrichtung SE2 neu gebildeten Sicherungszeichen zur Einrichtung A ist bei der unterstellten Parallelübertragung nicht erforderlich, wenn der parallele Datenweg zwischen der Einrichtung A und dem Pufferspeicher PSP durch Paritätskontrolle gesichert ist. Ebenso kann bei der Übertragung von der Einrichtung A zum Puffferspeicher PSP auf eine Übergabe eines zyklischen Sicherungszeichens verzichtet werden, da durch die Paritätskontrolle dieser Übertragungsweg ausreichend gesichert ist.

Fig. 2 zeigt den Aufbau der über den Auswahlschalter MU5 zur Einrichtung gesandten Daten für den Fall, daß es sich bei dieser Einrichtung um einen Plattenspeicher handelt. Diese Daten gliedern sich in zwei Datenfelder, nämlich ein Adreßfeld AD-F und das eigentliche Datenfeld D-F, wobei die Zahlen unterhalb der einzelnen Abschnitte die Anzahl der Wörter angibt. Beide Felder AD-F und D-F beginnen in an sich bekannter Weise mit einem Synchronisationszeichen S, dem dann in einem Falle die Sektoradressen S-AD und im anderen Falle die Daten D folgen. Beide Datenfelder sind durch ein Sicherungszeichen CRC der zweiten Sicherungseinrichtung SE2 ergänzt. Zusätzlich führt das Datenfeld D-F ein Sicherungszeichen ECC der ersten Sicherungseinrichtung SE1. In gleicher Weise könnte auch das Adreßfeld AD-F zusätzlich gesichert werden, wenn es notwendig ist. Selbstverständlich können die Datenfelder DF anhand der mitgeführten beiden Sicherungszeichen von der Plattenspeichersteuerung ebenfalls überprüft und die Sicherungszeichen vor Abspeicherung auf der Platte erneut erzeugt werden.

## Patentansprüche

1. Datenübertragungseinrichtung mit einem Pufferspeicher (PSP) für die Übertragung von Daten in der einen oder anderen Richtung zwischen dem Pufferspeicher (PSP) und einer Einrichtung (B), mit einer ersten Sicherungseinrichtung (SE1) zur Sicherung der Daten auf dem Weg zur Einrichtung (B) mit einem selbstkorrigierenden Code (ECC) und zur Erkennung und Korrektur auftretender Fehler bei den Daten auf dem Weg von der Einrichtung (B) zum Pufferspeicher (PSP) anhand des selbstkorrigierenden Codes (ECC), mit nach einem anderen Sicherungsprinzip arbeitenden zweiten Sicherungseinrichtungen (SE2), die aus einer Einrichtung zur Bildung von Sicherungszeichen (SI) für die in den Pufferspeicher (PSP) einzuspeichernden Daten zwecks gleichzeitiger Abspeicherung dieser Sicherungszeichen zusammen mit den zugehörigen Daten, aus einer Einrichtung zur Bildung von Sicherungszeichen für die aus dem Pufferspeicher (PSP) entnommenen Daten, aus einer Einrichtung zum Vergleich der beim Ausspeichern von Daten aus dem Pufferspeicher gebildeten Sicherungszeichen mit den von den aus dem Pufferspeicher ausgegebenen Daten mitgeführten Sicherungszeichen (Si) und aus einer Einrichtung zum Auslösen eines Signals im Fehlerfall bestehen, dadurch gekennzeichnet,

a) daß die Einrichtung (B) seriell arbeitet und über die Datenübertragungseinrichtung mit einer zweiten Einrichtung (A) gekoppelt ist, wobei ein Datenaustausch zwischen den beiden Einrichtungen (A und B) unabhängig von der Übertragungsrichtung mit Zwischenspeicherung der Daten im Pufferspeicher (PSP) erfolgt,

b) daß die zweite Sicherungseinrichtung (SE2) eine einzige Einrichtung zur Bildung von Sicherungszeichen (Si) aufweist und wahlweise entsprechend der einen oder anderen Übertragungseinrichtung an den Eingang oder den Ausgang des Pufferspeichers (PSP) anschaltbar ist,

c) daß in der ersten Sicherungseinrichtung (SE1) die aus dem Pufferspeicher (PSP) zugeführten Daten samt den zugehörigen Sicherungszeichen (Si) der Sicherung mit dem selbstkorrigierenden Code (ECC) unterzogen werden,

d) daß die von der seriell arbeitenden ersten Einrichtung (B) abgegebenen Daten und Sicherungszeichen (Si) parallel zu ihrer unmittelbaren Einspeicherung in den Pufferspeicher (PSP) unter Umgehung der zweiten Sicherungseinrichtung (SE2) von der ersten Sicherungseinrichtung (SE1) überprüft und die in den Pufferspeicher eingespeicherten Daten und Sicherungszeichen gegebenenfalls korrigiert werden, und

e) daß erst beim Weiterleiten der von der ersten Einrichtung (B) empfangenen und im Pufferspeicher (PSP) zwischengespeicherten Daten an die zweite Einrichtung (A) diese Daten samt den abgespeicherten zugehörigen Sicherungszeichen (Si) durch die zweite Sicherungseinrichtung (SE2) überprüft werden.

2. Datenübertragungseinrichtung nach Anspruch 1, dadurch gekennzeichnet, daß für die Sicherung der Daten durch die zweite Sicherungseinrichtung (SE2) ein zyklischer Sicherungscode (CRC) verwendet wird.

3. Datenübertragungseinrichtung nach Anspruch 1 oder 2, dadurch gekennzeichnet, daß die von der zweiten Einrichtung (A) angelieferten und nicht mit einem selbstkorrigierenden Code gesicherten Daten parallel zur Einspeicherung in den Pufferspeicher (PSP) ebenfalls der zweiten Sicherungseinrichtung (SE2) zugeführt werden und das gebildete Sicherungszeichen ebenfalls im Pufferspeicher (PSP) abgespeichert wird, während bei einer Ausgabe aus dem Pufferspeicher (PSP) vor Übertragung zu der durch den selbstkorrigierenden Code gesicherten ersten Einrichtung (B) das von der zweiten Sicherungseinrichtung (SE2) jeweils neu ermittelte Sicherungszeichen mit dem jeweils abgespeicherten Sicherungszeichen verglichen wird.

4. Datenübertragungseinrichtung nach einem der Ansprüche 1 bis 3, bei der die Daten von der zweiten Einrichtung in Paralleldarstellung angeboten bzw. übernommen werden, die Zwischenspeicherung im Pufferspeicher ebenfalls in Paralleldarstellung erfolgt und ein Parallel/Serienumsetzer vorgesehen ist, dadurch gekennzeichnet, daß die Ansteuerung der zweiten Sicherungseinrichtung (SE2) durch die Daten und die Übergabe der dazu ermittelten Sicherungszeichen der zweiten Sicherungseinrichtung (SE2) an den Pufferspeicher (PSP) jeweils über den Parallel/Serienumsetzer (S/P) erfolgt.

5. Datenübertragungseinrichtung nach einem der Ansprüche 1 bis 4, dadurch gekennzeichnet, daß bei Unterteilung der Daten in Adreß- und Informationswörter beide Arten von Wörtern durch die zweite Sicherungseinrichtung (SE2) getrennt gesichert werden, während die erste Sicherungseinrichtung (SE1) lediglich die Informationswörter (D) zusammen mit dem Sicherungszeichen (CRC) der zweiten Sicherungseinrichtung (SE2) sichert.

**Claims**

1. A data transmission device having a buffer store (PSP) for the transmission of data in the one or other direction between the buffer store (PSP) and a device (B), with a first safeguarding device (SE1) which serves to safeguard the data on the path to the device (B) by means of a self-correcting code (ECC) and which serves to recognise and correct errors which occur in the data on the path from the device (B) to the buffer store (PSP) with the assistance of the self-correcting code (ECC), having second safeguarding devices (SE2) which operate in accordance with another safeguarding principle and which comprise a device which serves to form safeguarding characters (SI) for the data to be input into the buffer store (PSP) for the simultaneous storage of these safeguarding characters together with the associated data, further comprising a device which serves to form safeguarding characters for the data taken from the buffer store (PSP), further comprising a device which serves to compare the safeguarding characters formed during the output of data from the buffer store with the safeguarding characters (Si) which accompany the data output from the buffer store, and comprising a device which serves to trigger a signal in the event of an error, characterised in that,

a) the device (B) operates in serial fashion and is coupled via the data transmission device to a second device (A), where a data exchange takes place between the two devices (A and B) independently of the direction of transmission, with intermediate storage of the data in the buffer store (PSP),

b) the second safeguarding device (SE2) has one single device which serves to form safeguarding characters (Si) and can be selectively connected, in accordance with the one or other direction of transmission, to the input or output of the buffer store (PSP),

c) in the first safeguarding device (SE1) the items of data supplied from the buffer store (PSP) are subjected, together with the asso-

ciated safeguarding characters (Si), to safe-guarding by means of the self-correcting code (ECC),

d) the items of data and safeguarding characters (Si) emitted from the first device (B), which operates in serial fashion, parallel to their direct input into the buffer store (PSP), whilst by-passing the second safeguarding device (SE2), are checked by the first safeguarding device (SE1), and the items of data and safeguarding characters stored in the buffer store are likewise corrected, and

e) not until the items of data which have been received by the first device (B) and intermediately stored in the buffer store (PSP) are forwarded to the second device (A), are these items of data, together with the stored, associated safeguarding characters (Si), checked by the second safeguarding device (SE2).

2. A data transmission device as claimed in claim 1, characterised in that a cyclic safeguarding code (CRC) is used to safeguard the data by means of the second safeguarding device (SE2).

3. A data transmission device as claimed in claim 1 or 2, characterised in that those items of data which have been supplied by the second device (A) and have not been safeguarded by means of a self-correcting code are — parallel to the input into the buffer store — likewise fed to the second safeguarding device (SE2), and the formed safeguarding character is likewise stored in the buffer store (PSP) whereas in the case of output from the buffer store (PSP), prior to transmission to the first device (B), which is safeguarded by means of the self-correcting code, the safeguarding character which has been re-established by the second safeguarding device (SE2) is compared with the stored safeguarding character.

4. A data transmission device as claimed in one of the claims 1 to 3, in which the items of data are offered and transferred from the second device in parallel representation, the intermediate storage in the buffer store likewise takes place in parallel representation, and a parallel/series converter is provided, characterised in that the drive of the second safeguarding device (SE2) by the data, and the transfer of the safeguarding characters, determined for this purpose, from the second safeguarding device (SE2) to the buffer store (PSP) each take place via the parallel/series converter (S/P).

5. A data transmission device as claimed in one of the claims 1 to 4, characterised in that when the items of data are divided into address- and information- words, both types of words are separately safeguarded by the second safeguarding device (SE2), whereas the first safeguarding device (SE1) safeguards only the information words (D) together with the safeguarding character (CRC) of the second safeguarding device (SE2).

**Revendications**

1. Installation pour la transmission de données avec une mémoire-tampon (PSP) pour la transmission de données, dans l'un ou dans l'autre sens, entre la mémoire-tampon (PSP) et un dispositif (B), avec un premier dispositif de protection (SE1) pour protéger les données dans la voie menant au dispositif (B) avec un code d'auto-correction (ECC) et pour identifier et corriger des erreurs qui apparaissent au niveau des données dans la voie menant du dispositif (B) à la mémoire-tampon (PSP) à l'aide du code d'auto-correction, avec de seconds dispositifs de protection (SE2) opérant suivant un autre principe de protection, et constitués par un dispositif pour former des signes de protection (SI) pour les données à mémoriser dans la mémoire-tampon (PSP) pour la mémorisation simultanée de ces signes de protection avec les données associées, par un dispositif pour former des signes de protection pour les données extraites de la mémoire-tampon (PSP), par une dispositif pour comparer les signes de protection formés lors de l'extraction de données de la mémoire-tampon avec les signes de protection (Si) convoyés par les données fournies par la mémoire-tampon, et par un dispositif pour déclencher un signal dans le cas d'une erreur, caractérisée par le fait:

a) que le dispositif (B) opère sériellement et est accouplé, par l'intermédiaire de l'installation de transmission de données, à un second dispositif (A), étant noté qu'un échange de données a lieu entre les deux dispositifs (A et B), indépendamment du sens de la transmission, avec mémorisation intermédiaire des données dans la mémoire-tampon (PSP),

b) que le second dispositif de protection (SE2) comporte un dispositif unique pour former des signes de protection (Si) et est susceptible d'être relié à l'entrée ou à la sortie de la mémoire-tampon (PSP), selon que la transmission se fait dans un ou dans l'autre sens,

c) que dans le premier dispositif de protection (SE1), les données qui y sont amenées à partir de la mémoire-tampon (PSP) sont soumises, de même que les signes de protection associés (Si), à la protection avec le code d'auto-correction (ECC), que les données et signes de protection (Si) qui sont émis par le premier dispositif (B) opérant en parallèle sont contrôlés par le premier dispositif de protection (SE1) pour leur mémorisation directe dans la mémoire-tampon (PSP), en contournant le second dispositif de protection (SE2), les données et signes de protection mémorisés dans la mémoire-tampon étant éventuellement corrigé, et

e) que ce n'est que lors de la transmission au second dispositif (A) des données reçues par le premier dispositif (B) et mémorisées temporairement dans la mémoire-tampon, que ces données, ainsi que les signes de protection associés (Si) qui ont été mémorisés, sont contrôlés par le second dispositif de protection.

2. Installation pour la transmission de données selon la revendication 1, caractérisée par le fait que pour la protection des données par le second dispositif de protection (SE2), on utilise un code de protection cyclique (CRC).

3. Installation pour la transmission de données selon la revendication 1 ou 2, caractérisée par le fait que les données qui sont fournies par le second dispositif (A) et qui n'ont pas été protégées avec un code d'auto-correction sont appliquées, en parallèle pour la mémorisation dans la mémoire-tampon (PSP), également au second dispositif de protection (SE2), le signe de protection qui est formé étant également mémorisé dans la mémoire-tampon (PSP), alors que lors de l'émission, à partir de la mémoire-tampon (PSP), et avant la transmission au premier dispositif (B) protégé par le code d'auto-correction, le signe de protection qui a été nouvellement déterminé par le second dispositif de protection (SE2) est comparé avec le signe de protection mémorisé.

4. Installation pour la transmission de données selon l'une des revendications 1 à 3, du type dans laquelle les données sont mises à disposition ou sont prises en charge par les seconds dispositifs, selon une représentation en parallèle, la mémorisation intermédiaire dans la mémoire-intermédiaire ayant également lieu en représentation parallèle, un convertisseur parallèle/série étant prévu, caractérisée par le fait que l'attaque du second dispositif de protection (SE2) par les données et la transmission à la mémoire-tampon (PSP) des signes de protection du second dispositif de protection (SE2), qui ont été déterminées, ont lieu par l'intermédiaire d'un convertisseur parallèle/série (SP).

5. Installation pour la transmission de données selon l'une des revendication 1 à 4, caractérisée par le fait que lors de la subdivision des données en mots d'adresses et d'informations, les deux genres de mots sont protégés séparément par le second dispositif de protection (SE2), alors que le premier dispositif de protection (SE1) protège uniquement les mots d'information (D) au moyen du signe de protection (CRC) du second dispositif de protection (SE2).

FIG 1

FIG 2